# EUROPEAN PATENT SPECIFICATION

(11) **EP 4 481 210 B1**
(45) Date of publication and mention of the grant of the patent: **22.04.2026**
(21) Application number: 23180411.3
(22) Date of filing: 20.06.2023
(51) Int. Cl.: F16B 5/02

(54) **ASSEMBLY FOR A VEHICLE COMPRISING A FIRST STRUCTURE AND A SECOND STRUCTURE**
MONTAGE FÜR EIN FAHRZEUG MIT EINER ERSTEN STRUKTUR UND EINER ZWEITEN STRUKTUR
ENSEMBLE POUR VÉHICULE COMPRENANT UNE PREMIÈRE STRUCTURE ET UNE DEUXIÈME STRUCTURE

(43) Date of publication of application: 25.12.2024
(73) Proprietor: Valeo Comfort and Driving Assistance, 94000 Créteil (FR)
(72) Inventor: CALEB, Jerry, 94000 Créteil (FR); KUMAR, Manish, 94000 Créteil (FR)
(74) Representative: Delplanque, Arnaud

(56) References cited:
- WO-A1-2013/007368
- WO-A1-2017/044707
- WO-A1-86/00118
- US-A1- 2014 305 046
- US-A1- 2018 347 616

## Description

The present invention relates to an assembly for a vehicle that comprises a first structure and a second structure that are joined along a joint interface. Such an assembly may be used, but not exclusively, in the automotive domain.

In the automotive domain, an assembly for a vehicle that comprises a first structure and a second structure that are joined along a joint interface, well-known by the person skilled in the art, is such that the first structure comprises a first hole that extends through a first contact surface and the second structure comprises a second hole that extends through a second contact surface and arranged opposite to the first hole. The first contact surface and the second contact surface form the joint interface. A bolt is positioned through the said at least one hole and the said at least second hole.The document WO2013/007368 A1 discloses an assembly for a motor vehicle where two components are fixed together by means of a fastening element. US2018347616A1 discloses an assembly and a method of joining structures.

One problem of this prior art is that under bolt pretension, the first contact surface and the second contact surface can be separated within an area that is under a pressure cone during vibrations of the vehicle when said vehicle is moving for example. The displacement of one contact surface relative to the other contact surface is important.

It is an object of the invention to provide an assembly, which resolves the problem above-stated.

The invention is an assembly according to claim 1 and a method according to claim 10. To this end, it is provided an assembly for a vehicle comprising a first structure and a second structure that are joined along a joint interface, said first structure comprising at least one first hole that passes through the whole first structure and said second structure comprising at least one second hole that passes through the whole second structure and that is arranged opposite to said at least one first hole,
- a fastener positioned through the said at least one hole and the said at least one second hole, wherein at least one of said first structure or said second structure comprises at least one undercut that is arranged respectively around said at least one first hole or around said at least one second hole.

As we will see in further details, thanks to the undercut, the stiffness of the structure to which it belongs to is increased around the hole and within the pressure cone. Thus, the displacement of one contact surface relative to the other contact surface is low when the assembly goes into vibrations, which means that the first natural frequency of the assembly is increased. The result is that the first natural frequency of the assembly won't be affected by the frequency of the vibrations of the vehicle as this latter will be very low compared to said first natural frequency of said assembly.

According to non-limitative embodiments of the invention, the assembly in accordance with the invention further comprises the following characteristics.

According to the invention, both first structure and second structure comprise at least one undercut.

In a non-limitative embodiment, said fastener applies a compression force on said at least one undercut so that it is in contact in a contact area with a surface of the first structure or of the second structure opposite to the one said at least one undercut belongs to, said contact area forming a part of the joint interface.

In a non-limitative embodiment, said at least one undercut starts from said at least one first hole or from said at least one second hole around which it is arranged.

In a non-limitative embodiment, said first structure presents a first contact surface and said second structure presents a second contact surface, said first contact surface and said second contact surface forming a part of the joint interface.

In a non-limitative embodiment, said at least one undercut includes a slope that extends from said at least one first hole or from said at least one second hole around which it is arranged to the joint interface.

In a non-limitative embodiment, said at least one undercut has a flat surface that is parallel to the first contact surface or to the second contact surface of respectively the first structure or the second structure to which said at least one undercut belongs to.

In a non-limitative embodiment, said at least one undercut has an upper view circular form

In a non-limitative embodiment, said first structure is a Telematic Control Unit.

In a non-limitative embodiment, said second structure is a hood or a roof.

In a non-limitative embodiment, said at least one undercut has a radius equal or larger than the radius of said fastener.

In a non-limitative embodiment, at least one of said first structure or said second structure comprises respectively a plurality of first holes or a plurality of second holes, and comprises a plurality of undercuts that are arranged respectively around said first holes or around said second holes.

There is also provided a method of assembling a first structure and a second structure along a joint interface, wherein said method comprising:
- providing a first structure comprising at least one first hole that passes through the whole first structure,
- providing a second structure comprising at least one second hole that passes through the whole second structure, at least one of said first structure or said second structure comprising at least one undercut that is arranged respectively around said at least one first hole or around said at least one second hole,
- positioning said first structure and said second structure so that they come into contact altogether and so that said at least one second hole is arranged opposite to said at least one first hole,
- positioning a fastener through said at least one first hole and through said at least one second hole,
- applying a compression force on the first structure and on the second structure by means of said fastener so that said at least one undercut comes into contact in a contact area with a surface, of the first structure or of the second structure opposite to the one said at least one undercut belongs to, said contact area forming a part of the joint interface.

In a non-limitative embodiment, the surface with which said at least one undercut comes into contact is the first contact surface or the second contact surface or an opposite undercut.

In a non-limitative embodiment, said first structure presents a first contact surface and said second structure presents a second contact surface, and wherein said first structure and said second structure are positioned so that said first contact surface and said second contact surface come into contact to form a first part of the joint interface.

Some embodiments of methods and/or apparatus in accordance with embodiments of the present invention are now described, by way of example only, and with reference to the accompanying drawings, in which:

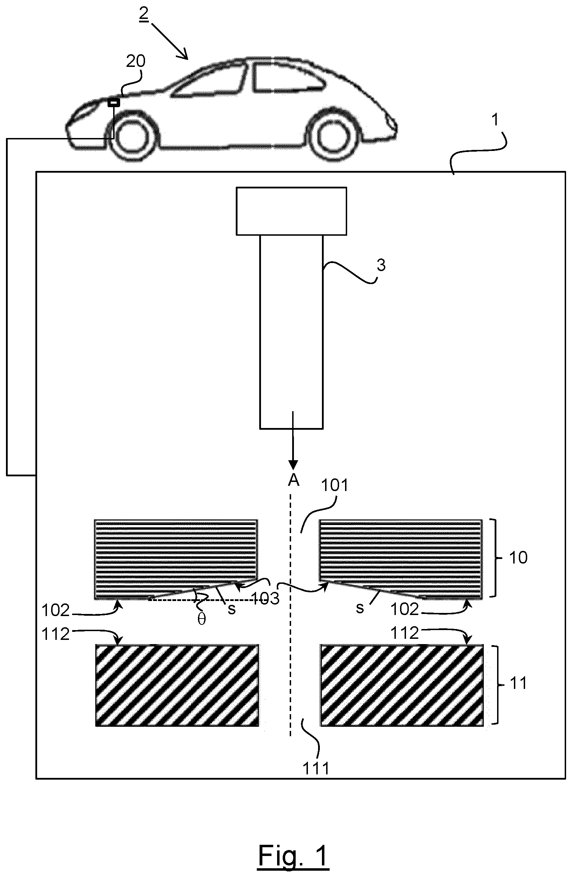

[Fig. 1] illustrates a sectional exploded view of an assembly for a vehicle according to a first non-limitative embodiment of the invention, said assembly comprising a first structure and a second structure that are joined along a joint interface and a fastener, the first structure comprising an undercut arranged according to a first non-limitative embodiment,

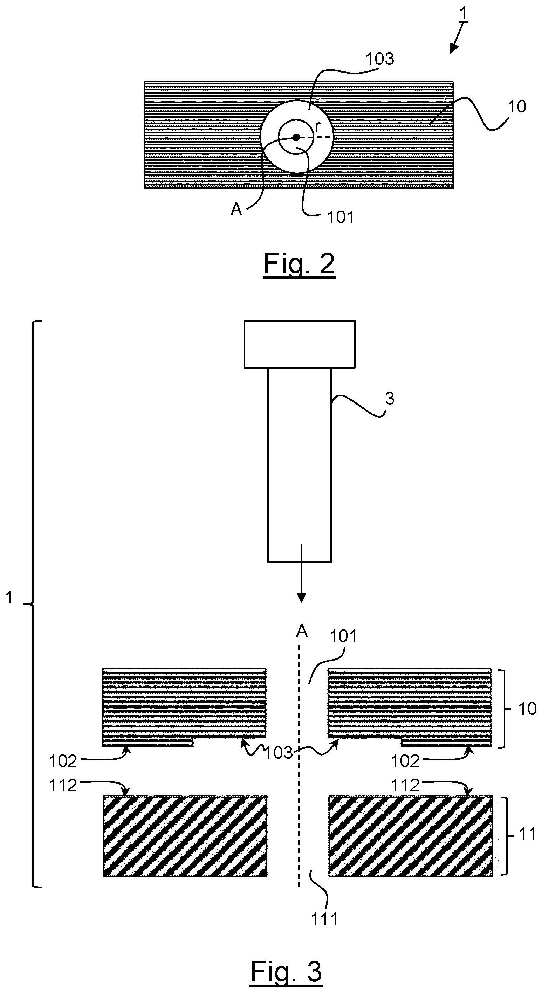

[Fig. 2] illustrates a top view of the assembly of figure 1, according to a non-limitative-embodiment,
[Fig. 3] illustrates a sectional exploded view of an assembly for a vehicle according to a first non-limitative embodiment of the invention, said assembly comprising a first structure and a second structure that are joined along a joint interface and a fastener, the first structure comprising an undercut arranged according to a second non-limitative embodiment,

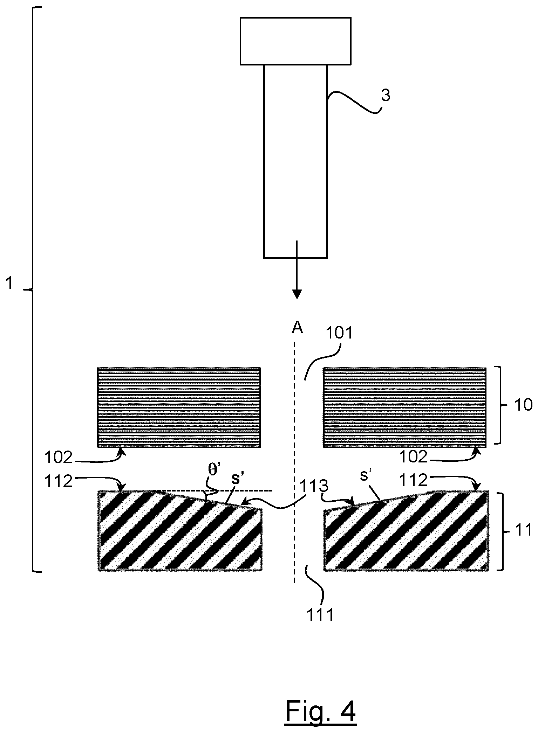

[Fig. 4] illustrates a sectional exploded view of an assembly for a vehicle according to a second non-limitative embodiment of the invention, said assembly comprising a first structure and a second structure that are joined along a joint interface and a fastener, the second structure comprising an undercut arranged according to a first non-limitative embodiment,

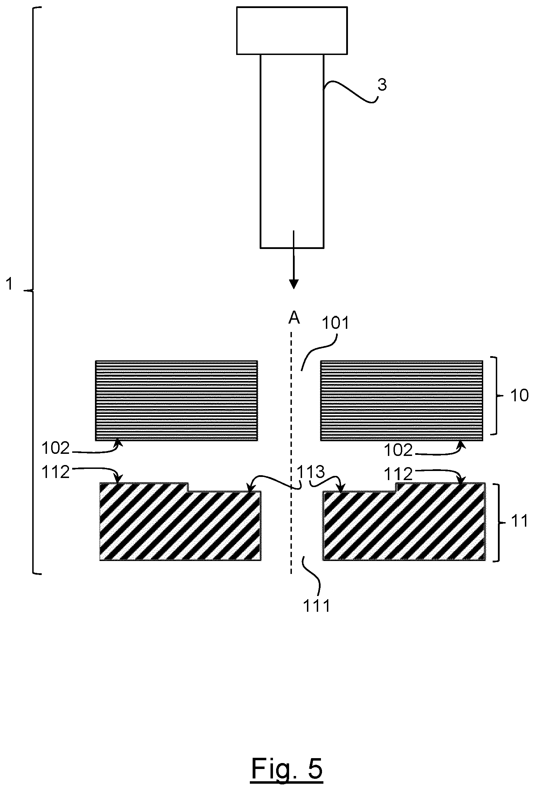

[Fig. 5] illustrates a sectional exploded view of an assembly for a vehicle according to a second non-limitative embodiment of the invention, said assembly comprising a first structure and a second structure that are joined along a joint interface and a fastener, the second structure comprising an undercut arranged according to a second non-limitative embodiment,

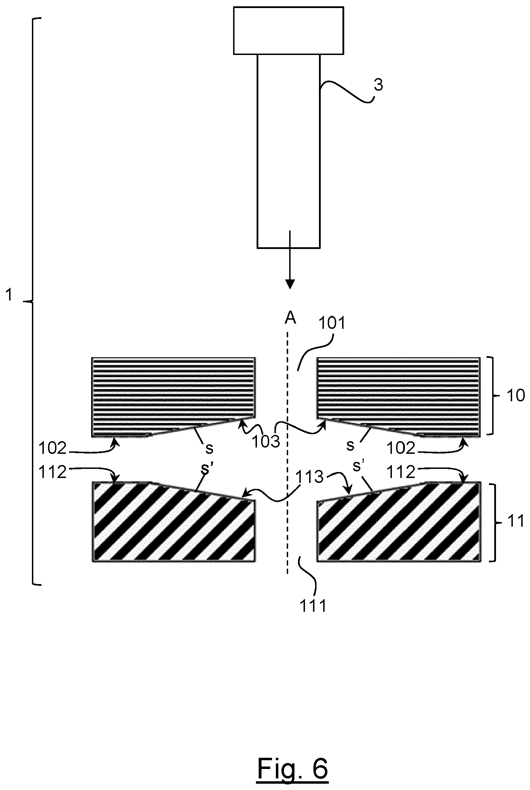

[Fig. 6] illustrates a sectional exploded view of an assembly for a vehicle according to a third non-limitative embodiment of the invention, said assembly comprising a first structure and a second structure that are joined along a joint interface and a fastener, both first and second structures comprising each an undercut arranged according to a first non-limitative embodiment,

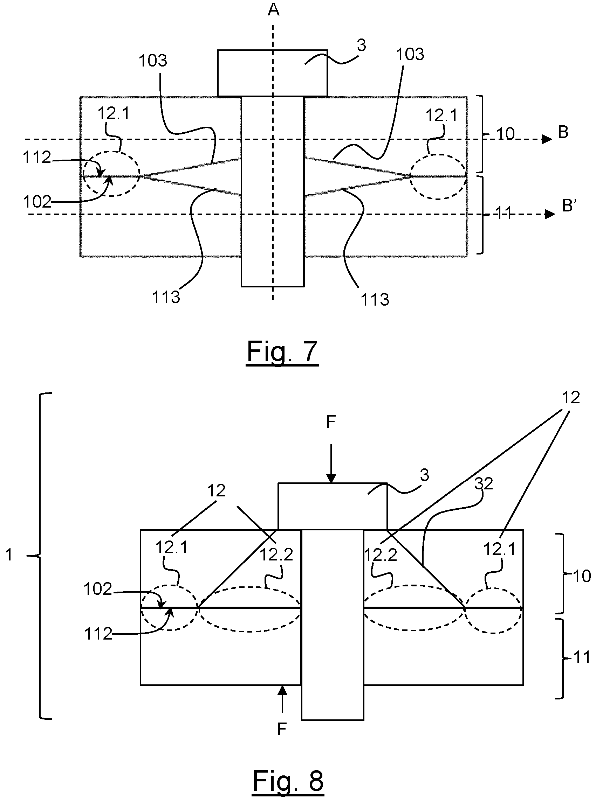

[Fig. 7] illustrates a sectional view of the assembly of figure 6 when the first structure and the second structure are positioned opposite one to each other so as to be in contact and when no compression force is applied to the first structure or the second structure via the fastener, according to a non-limitative embodiment,
[Fig. 8] illustrates a sectional assembled view of the assembly of figure 6 when a compression force is applied to the first structure or the second structure via the fastener, according to a non-limitative embodiment,

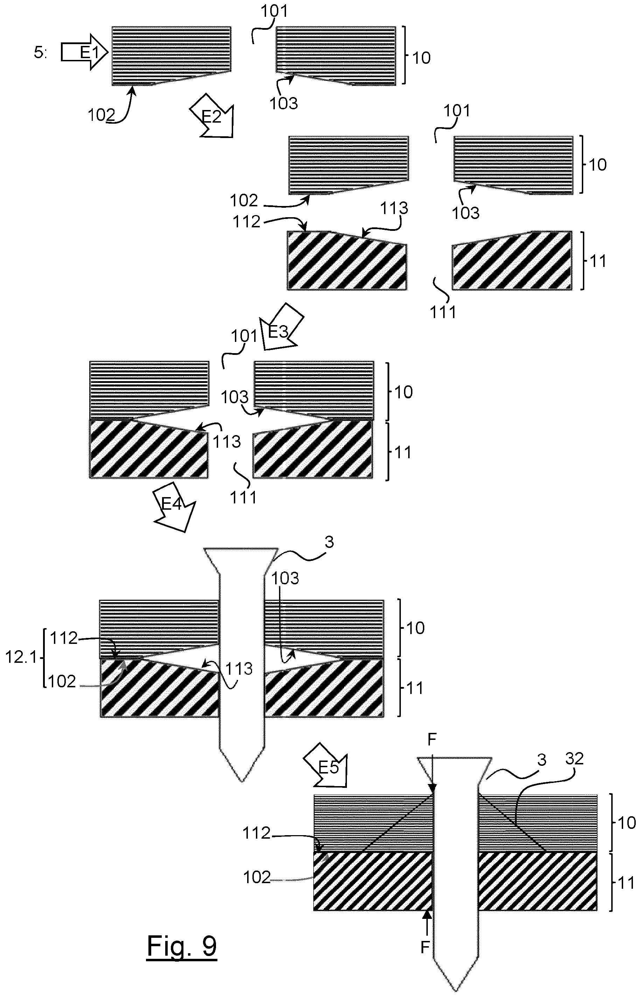

[Fig. 9] illustrates a method of assembling a first structure and a second structure along a joint interface of any figures 1 to 6, according to a first non-limitative embodiment,

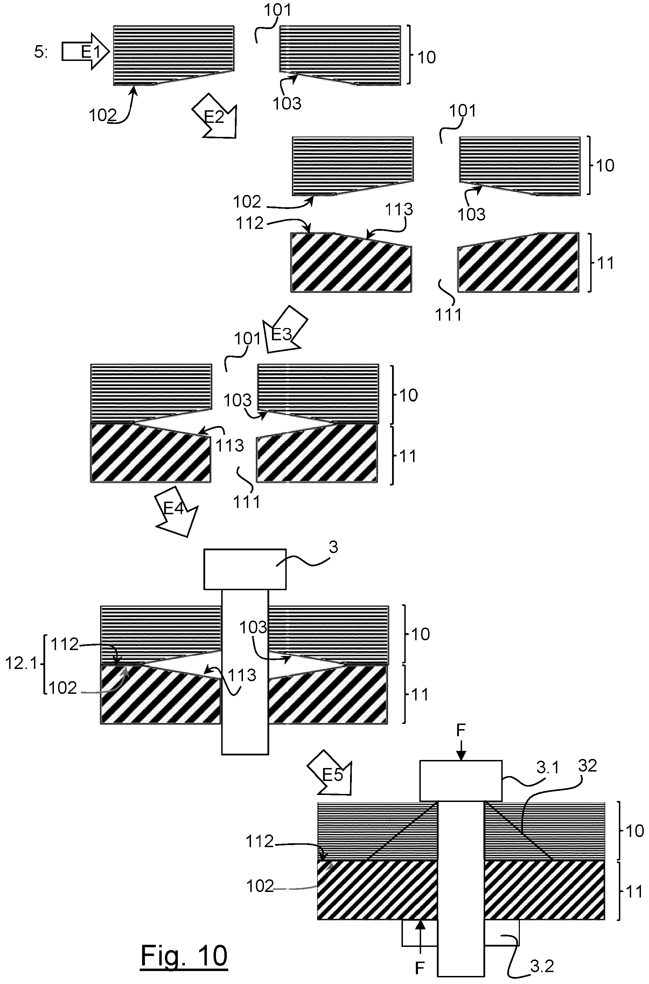

[Fig. 10] illustrates a method of assembling a first structure and a second structure along a joint interface of any figures 1 to 6, according to a second non-limitative embodiment.

The present invention relates to an assembly 1 for a vehicle 2, said assembly 1 being described in reference to figures 1 to 8, according to non-limitative embodiments. In a non-limitative embodiment, said vehicle 2 is an automobile vehicle.

In the following, by "opposite", one means in vis à vis of.

As illustrated in figure 1, 3 to 6, and 8 the assembly 1 comprises :
- a first structure 10,
- a second structure 11,
- a fastener 3.

In a non-limitative embodiment, the first structure 10 is independent from the body of the vehicle 2 and said second structure 11 is part of the body of the vehicle 2.

In a non-limitative embodiment, the first structure 10 is a telematic control unit referred as to TCU. In a non-limitative embodiment, the second structure 11 is the hood 20 of the vehicle 2. In this case, in a non-limitative example, the TCU is fixed under the hood, near the engine of the vehicle.

The first structure 10 and the second structure 11 are joined along a joint interface 12 illustrated in figures 7 and 8. For clarity of the figures, the grooves to delimit the first structure 10 and the second structure 11 are not illustrated in figures 7 and 8.

The first structure 10 presents a first contact surface 102 and the second structure 11 presents a second contact surface 112. When the first structure 10 comprises an undercut 103, the first contact surface 102 is arranged around said undercut 103. When the second structure 11 comprises an undercut 113, the second contact surface 112 is arranged around said undercut 113. When there is no undercut 103, the first contact surface 102 extends along the whole first structure 10. When there is no undercut 113, the second contact surface 112 extends along the whole second structure 11.

The joint interface 12 comprises two parts 12.1 and 12.2.

As illustrated in figures 7 and 8, the first part 12.1 of the joint interface 12 is formed by said first contact surface 102 and said second contact surface 112 when they are into contact and where the undercut 103 is not arranged.

As illustrated in figure 8, the second part 12.2 of the joint interface 12 is formed by a contact area 12.2 that is the contact area where the first structure 10 and the second structure 11 come into contact where the at least one undercut 103, 113 is arranged. The undercut 103, 113 is described later in the following.

As illustrated in figure 7, in a non-limitative embodiment, the first structure 10 extends longitudinally along an axis B, and the second structure 11 extends longitudinally along an axis B'. In a non-limitative embodiment, the longitudinal axis B' is parallel to the longitudinal axis B. The fastener 3 extends longitudinally along an axis A. The axis A is perpendicular to the axis B and B'.

The first structure 10 presents a first thickness e. The second structure presents a second thickness e'.

As illustrated in figures 1, 3 to 6, the first structure 10 comprises at least one first hole 101 that passes through the whole first structure 10, that is to say that it passes through the first thickness e of said first structure 10 along the axis A. The second structure 10 comprises at least one second hole 111 that passes through the whole second structure 11, that is to say that it passes through the second thickness e' of said second structure 11 along the axis A.

In a non-limitative embodiment not illustrated, the first structure 10 comprises a plurality of first holes 101 and the second structure 11 comprises a plurality of second holes 111.

In a non-limitative embodiment illustrated in the figures, the first structure 10 comprises one first hole 101 and the second structure 11 comprises one second hole 111. This non-limitative embodiment is taken as a non-limitative example in the following.

The second hole 111 is arranged opposite to said first hole 101. As illustrated in figures 7 and 8, the fastener 3 passes through the first hole 101 and the second hole 111.

In a non-limitative embodiment, the fastener 3 is a screw (illustrated in figure 9). In this case, the first hole 101 and the second hole 111 are threaded holes. In figure 9, for simplicity, the thread of the holes and of the screw 3 is not drawn. In another non-limitative embodiment, the fastener 3 is composed of a bolt 3.1 and of a nut 3.2 (illustrated in figure 10). In this case, the first hole 101 and the second hole 111 are also called bolt holes.

The fastener 3 is configured to assemble the first structure 10 and the second structure 11 together. To do so, a compression force F illustrated in figure 8 is applied to the first structure 10 and to the second structure 11 via the fastener 3.

At least one of the first structure 10 or of the second structure 11 comprises at least one undercut referred to as respectively 103, 113. The undercut 103, 113 is arranged respectively around said at least one first hole 101 or around said at least second hole 111. In a non-limitative example, the undercut 103, 113 has a circular form in an upper view. In this case, it is circumferentially arranged around said at least one first hole 101 or around said at least second hole 111.

When there is no compression force F applied and when the first structure 10 and the second structure 11 are positioned opposite one to each other as illustrated in figure 7 so that they are into contact, the first contact surface 102 and the second contact surface 112 are in contact altogether and they form the first part 12.1 of the joint interface 12.

When a compression force F is applied via the fastener 3 as illustrated in figure 8, the undercut 103, 113 comes into contact respectively with the opposite structure 11, 10 where it doesn't belong to. It comes into contact in a contact area 12.2 which forms the second part of the joint interface 12. Either it comes into contact with a contact surface 112, 102 if the opposite structure 11, 10 doesn't have any undercut 113, 103; either it comes into contact with the other undercut 113, 103 if the opposite structure 11, 10 has an undercut 113, 103.

When the vehicle 2 is moving, in the case of the non-limitative embodiment of the TCU and the hood, the first structure 10 moves horizontally along the axis B relatively to the second structure 11 which is the hood. In other words, there is a displacement of the TCU relative to the hood because of the vibrations of the vehicle 2.

The undercut(s) 103, 113 permits to add a larger contact pressure between the first structure 10 and the second structure 11 of the assembly 1 so that the horizontal displacement of the first structure 10 relative to the second structure 11 is lower than when the assembly 1 is devoid of undercut(s) 103, 113.

It means that the first natural frequency of the first structure 10, here the TCU, is higher than the one when the assembly 1 is devoid of an undercut(s) 103, 113. Hence, the first natural frequency of the TCU is higher than the frequency of the vibrations of the vehicle 2. It has a much higher amplitude. In a non-limitative example, the amplitude of the first natural frequency will be four times higher than the one of the vibrations. In a non-limitative example, the frequency of the vibrations is 100Hz, and the first natural frequency will be 400Hz. The result is that when there are some vibrations of the second structure 11, here the hood, because the vehicle 2 is moving, the frequency of these vibrations won't affect the first natural frequency of the TCU as it will be negligible compared to the first natural frequency of the TCU.

The undercut 103 of the first structure 10 is also referred to as first undercut 103. The undercut 113 of the second structure 11 is also referred to as second undercut 113.

As illustrated in figure 1 to 3, in a first non-limitative embodiment, the first structure 10 comprises an undercut 103, whereas the second structure 11 is devoid of undercut. In this case, the second part 12.2 of the joint interface 12 is formed by the undercut 103 and the second contact surface 112 when a compression force F is applied via the fastener 3.

As illustrated in figure 4 and 5, in a second non-limitative embodiment, the second structure 11 comprises an undercut 113, whereas the first structure 10 is devoid of undercut. In this case, the second part 12.2 of the joint interface 12 is formed by the undercut 113 and the first contact surface 102 when a compression force F is applied via the fastener 3.

As illustrated in figure 6, in a third non-limitative embodiment, the first structure 10 comprises an undercut 103 and the second structure 11 comprises an undercut 113. The undercut is arranged opposite to the undercut 113 so that they are arranged around the axis A in the same manner. Hence, both first structure 10 and second structure 11 comprise at least one undercut 103, 113. In this case, the second part 12.2 of the joint interface 12 is formed by the undercut 103 and by the undercut 113 when a compression force F is applied via the fastener 3.

As illustrated in the figures, the undercut 103, 113 starts respectively from the first hole 101, second hole 111 of respectively the first structure 10 and second structure 11 where it belongs to. Hence, as illustrated in figures 1 to 3 and figure 6, the undercut 103 of the first structure 10 arises from the first hole 101. As illustrated in figures 4, 5 and 6, the undercut 113 of the second structure 11 arises from the second hole 111.

In a first non-limitative embodiment illustrated in figure 1, 4 and 6, the undercut 103, 113 includes a slope s, s' that extends from respectively the hole 101, 111 to the joint interface 12. Hence, in a sectional view, it has a triangular form that arises from the hole 10, 11. As illustrated in figure 1, the undercut 103 includes a slope s that extends from the first hole 101 to the joint interface 12. As illustrated in figure 4, the undercut 113 includes a slope s' that extends from the second hole 111 to the joint interface 12. With the slope s, the undercut 103 comes gradually into contact with the second contact surface 112 when a compression force F is applied via the fastener 3, or with the other undercut 113 that is opposite to it. It avoids breaking the material of the assembly 1. The same applies for the slope s'. With the slope s', the undercut 113 comes gradually into contact with the first contact surface 102 when a compression force F is applied via the fastener 3, or with the other undercut 103 that is opposite to it.

In a non-limitative embodiment, the slope s makes an angle θ with the second contact surface 112 that is greater than 0° and less than 45°. The angle θ is illustrated in figure 1. In figure 1, the horizontal line that is in dotted line represents the second contact surface 112, as it is an exploded view of the assembly 1 where the first structure 10 and the second structure 11 are illustrated without any contact. In a non-limitative embodiment, the slope s' makes an angle θ' with the first contact surface 102 that is greater than 0° and less than 45°. The angle θ' is illustrated in figure 4. In figure 4, the horizontal line that is in dotted line represents the first contact surface 102, as it is an exploded view of the assembly 1 where the first structure 10 and the second structure 11 are illustrated without any contact.

In a second non-limitative embodiment illustrated in figure 3 and 5, the undercut 103, 113 has a rectangular form in a sectional view. As illustrated in figure 3, the undercut 103 has a flat surface. In a non-limitative embodiment, the flat surface is parallel to the first contact surface 102. As illustrated in figure 5, the undercut 113 has a flat surface. In a non-limitative embodiment, the flat surface is parallel to the second contact surface 112. It is to be noted that the rectangular form is less robust than the triangle form, as it can break, in particular around the corners, if there is too much compression force F applied via the fastener 3.

In a non-limitative embodiment illustrated in figure 2, the undercut 103 has an upper view circular form. The same applies for the undercut 113 although it is not illustrated. This form is easy to process and is uniform around the hole 101. The distribution of the compression force F is therefore uniform on the whole undercut 103. The same applies for the undercut 113 with the hole 111.

In a non-limitative embodiment, when the first structure 10 is a TCU, the undercut 103, 113 has a radius r equal or larger than the radius of the fastener 3. It is to be noted that the range value of the radius r depends on the size of the fastener 3 and of the first structure 10 and of the second structure 11. The bigger the fastener 3 is, the bigger the radius r of the undercut 103, 113 is. It is to be noted that the size of the diameter of the undercuts 103, 113 defines the size of the contact area 12.2. In the case of the non-limitative embodiment of the TCU as the first structure 10 and the hood as the second structure 11, the radius r is of 8 millimeters.

It is to be noted that when a compression force F is applied, it creates a pressure cone 32 illustrated in figure 8. It is to be noted that the value of the compression force F depends on the type of fastener 3 that is used. The compression force F is transmitted under a triangle in a sectional view that represents the pressure cone 32. In other words, the force distribution travels in a conical way. The pressure cone 32 is relative to the size of the undercut 103, 113. In other words, the pressure cone 32 is present till the undercut area. It means that the wider the undercut 103, 113 is, the bigger the pressure cone 32 is.

When a compression force F is applied, the undercut 103, 113 is configured to come into contact, within the pressure cone 32 of said fastener 3, with a surface (either the contact surface 112, 102, or either the surface of the opposite undercut 113, 103) of the structure 11, 10 to which it doesn't belong to.

As illustrated in figures 1 and 3, the undercut 103 will come into contact with the second contact surface 112. As illustrated in figures 4 and 5, the undercut 113 will come into contact with the first contact surface 102. As illustrated in figure 6, the undercut 103 will come into contact with the undercut 113.

In a non-limitative embodiment illustrated in figure 8, the undercut 103, 113 is arranged within this pressure cone 32. It doesn't go beyond the pressure cone 32. In other words, when it has an upper view circular form, the circular form is within the pressure cone 32. In a non-limitative embodiment, the radius r of the undercut 103, 113 is equal to the radius of the pressure cone 32. In another non-limitative embodiment, the radius r of the undercut 103, 113 is smaller than the radius of the pressure cone 32.

The first structure 10 and the second structure 11 are assembled together according to method 5. The method 5 for assembling the first structure 10 and the second structure 11 along the joint interface 12 is described in reference to figure 9 and figure 10. Figure 9 illustrated the method 5 when a screw is used as a fastener 3. Figure 10 illustrated the method 5 when a fastener 3, composed of a bolt 3.1 and a nut 3.2, is used. In the non-limitative embodiment described, the first structure 10 comprises one first hole 101 and the second structure 11 comprises one second hole 111. In the non-limitative embodiment described, the first structure 10 comprises one undercut 103 that is arranged around the first hole 101, and the second structure 11 comprises one undercut 113 that is arranged around the second hole 111.

In step E1, the first structure 10 with one first hole 101 that passes through the whole first structure 10 is provided on a production line.

In step E2, the second structure 11 with one second hole 111 that passes through the whole second structure 11 on the production line.

In step E3, the first structure 10 and the second structure 11 are positioned so that the first contact surface 102 and the second contact surface 112 come into contact and form part of the joint interface 12 and so that the second hole 111 is arranged opposite to the first hole 101.

In step E4, the fastener 3 is positioned through the first hole 101 and the second hole 111. It passes through them. In figure 9, the positioning is performed by screwing the fastener 3 so that the body of the fastener 3 passes through the first hole 101 and the second hole 111. In figure 10, the positioning is performed by screwing the bolt 3.1 so that the body of the bolt 3.1 passes through the first hole 101 and the second hole 111.

In sept E5, a compression force F is applied on the first structure 10 and on the second structure 11 by means of the fastener 3 so that the undercut 103 comes into contact with a surface of the structure, here the second structure 11 that is opposite to the one it belongs to (here, the first structure 10). The surface is either an opposite undercut or a contact surface. The compression force F acts from top and also from bottom of the assembly 1. In figure 9, the compression force F results from a torque which is applied when screwing the screw 3. The pressure cone 32 starts from the screw's head 3. In figure 10, the compression force F results from a torque which is applied when screwing the nut 3.2 around the body of the bolt 3.1. The pressure cone 32 starts from the bolt's head 3. Thanks to the undercut 103, the pressure cone area is extended so that the pressure cone 32 is present till the undercut area.

In the non-limitative embodiment illustrated, the undercut 103 comes into contact with the undercut 113. It comes into contact within the pressure cone 32. The contact area 12.2 where both undercuts 103 and 113 come into contact completes the joint interface 12. For clarity of the figure 9, due to the grooves, there is no reference 12.2 and 12. One should refer to figure 8. Hence, the first structure 10 and the second structure 11 are assembled altogether. In the non-limitative embodiment of the TCU and the hood, the TCU is hence assembled to the hood and maintained into position under the hood of the vehicle 2.

It is to be understood that the present invention is not limited to the aforementioned applications. It is to be understood that the present invention is not limited to the aforementioned embodiments and variations and modifications may be made without departing from the scope of the invention, which is defined by the appended claims. Hence, in other non-limitative embodiments, another application where the assembly 1 of the invention can be used is the application of housing appliances or machineries. Hence, in other non-limitative embodiments, the first structure 10 is an engine control unit, a sensor, a camera, a central control unit of the vehicle 2. Hence, in other non-limitative embodiments, the second structure 11 is the roof, the trunk or the tailgate of the vehicle 2. In the non-limitative example of the roof, in this case, the second structure 11 is a decorative part of the roof and the TCU is fixed on this decorative part.

Hence, some embodiments of the invention may comprise one or a plurality of the following advantages:
- by removing some material within the first structure 10 and the second structure 11, one creates one or a plurality of undercuts 103, 113 which permits to increase the first natural frequency of the assembly 1. Thus, the assembly 1 won't be affected by the vibrations frequency of the vehicle 2 when it is moving,
- it is a better solution than a solution which consists in adding some material, such as some rubber, to create a gap between the first structure 10 and the second structure 11 inside the pressure cone and outside the pressure cone, that is to say on both sides of the rubber, as this solution with the rubber results in that :
   - there is some looseness in the assembly 1,
   - the assembly 1 is prone to vibrate in different directions vertical and horizontal,
   - there are some vibrations in the gap when the vehicle is moving,
   whereas the assembly 1 of the invention doesn't have these problems,
- it is a simple solution and easy to process.

## Claims

1. Assembly (1) for a vehicle (2) comprising :
- a first structure (10) and a second structure (11) that are joined along a joint interface (12), said first structure (10) comprising at least one first hole (101) that passes through the whole first structure (10) and said second structure (11) comprising at least one second hole (111) that passes through the whole second structure (11) and that is arranged opposite to said at least one first hole (101),
- a fastener (3) positioned through the said at least one hole (101) and the said at least one second hole (102),
wherein said first structure (10) comprises at least one undercut (103) around said at least one first hole (101) and said second structure (11) comprises at least one undercut ( 113) that is arranged around said at least one second hole (111) so that when a compression force F is applied on the fastener, the compression force F is transmitted under a triangle in a sectional view that represents a pressure cone (32) created till the undercut area.

2. Assembly (1) according to any of the preceding claims, wherein said fastener (3) applies a compression force (F) on said at least one undercut (103, 113) so that it is in contact in a contact area (12.2) with a surface (102, 112, 103, 113) of the first structure (10) or of the second structure (11) opposite to the one said at least one undercut (103, 113) belongs to, said contact area (12.2) forming a part (12.2) of the joint interface (12).

3. Assembly (1) according to any of the preceding claims, wherein said at least one undercut (103, 113) starts from said at least one first hole (101) or from said at least one second hole (111) around which it is arranged.

4. Assembly (1) according to any of the preceding claims, wherein said first structure (10) presents a first contact surface (102) and said second structure (11) presents a second contact surface (112), said first contact surface (102) and said second contact surface (112) forming a part (12.1) of the joint interface (12).

5. Assembly (1) according to any of the preceding claims, wherein said at least one undercut (103, 113) includes a slope (s, s') that extends from said at least one first hole (101) or from said at least one second hole (111) around which it is arranged to the joint interface (12).

6. Assembly (1) according to the preceding claim 4, wherein said at least one undercut (103, 113) has a flat surface that is parallel to the first contact surface (102) or to the second contact surface (112) of respectively the first structure (10) or the second structure (11) to which said at least one undercut (103, 113) belongs to.

7. Assembly (1) according to any of the preceding claims, wherein said at least one undercut (103, 113) has an upper view circular form.

8. Assembly (1) according to any of the preceding claims, wherein said first structure (10) is a Telematic Control Unit.

9. Assembly (1) according to any of the preceding claims, wherein said second structure (11) is a hood or a roof.

10. A method (5) of assembling a first structure (10) and a second structure (11) along a joint interface (12), wherein said method (5) comprising:
- providing a first structure (10) comprising at least one first hole (101) that passes through the whole first structure (10),
- providing a second structure (11) comprising at least one second hole (111) that passes through the whole second structure (11), said first structure (10) comprises at least one undercut (103) arranged around said at least one first hole (101)and said second structure (11) comprising at least one undercut (113) that is arranged around said at least one second hole (111),
- positioning said first structure (10) and said second structure (11) so that they come into contact altogether and so that said at least one second hole (111) is arranged opposite to said at least one first hole (101),
- positioning a fastener (3) through said at least one first hole (101) and through said at least one second hole (111),
- applying a compression force (F) on the first structure (10) and on the second structure (11) by means of said fastener (3) so that said at least one undercut (103, 113) comes into contact in a contact area (12.2) with a surface (102, 112, 103, 113) of the first structure (10) or of the second structure (11) opposite to the one said at least one undercut (103, 113) belongs to, said contact area (12.2) forming a part of the joint interface (12), so that when said compression force F is applied on the fastener, the compression force F is transmitted under a triangle in a sectional view that represents a pressure cone (32) created till the undercut area.

11. A method (5) according to the preceding claim, wherein the surface with which said at least one undercut (103, 113) comes into contact is the first contact surface (102) or the second contact surface (112) or an opposite undercut (113, 103).

12. A method (5) according to claim 10 or claim 11, wherein said first structure (10) presents a first contact surface (102) and said second structure (11) presents a second contact surface (112), and wherein said first structure (10) and said second structure (11) are positioned so that said first contact surface (102) and said second contact surface (112) come into contact to form a first part (12.1) of the joint interface (12).

## Patentansprüche

1. Baugruppe (1) für ein Fahrzeug (2), umfassend:
- eine erste Struktur (10) und eine zweite Struktur (11), die entlang einer Verbindungsschnittstelle (12) verbunden sind, wobei die erste Struktur (10) mindestens ein erstes Loch (101) umfasst, das durch die gesamte erste Struktur (10) verläuft, und die zweite Struktur (11) mindestens ein zweites Loch (111) umfasst, das durch die gesamte zweite Struktur (11) verläuft und das gegenüber dem mindestens einen ersten Loch (101) angeordnet ist,
- ein Befestigungselement (3), das durch das mindestens eine Loch (101) und das mindestens eine zweite Loch (102) positioniert ist,
wobei die erste Struktur (10) mindestens eine Hinterschneidung (103) um das mindestens eine erste Loch (101) umfasst und die zweite Struktur (11) mindestens eine Hinterschneidung (113) umfasst, die um das mindestens eine zweite Loch (111) angeordnet ist, so dass, wenn eine Kompressionskraft F auf das Befestigungselement ausgeübt wird, die Kompressionskraft F unter einem Dreieck in einer Schnittansicht übertragen wird, das einen Druckkegel (32) darstellt, der bis zum Hinterschneidungsbereich erzeugt wird.

2. Baugruppe (1) nach einem der vorhergehenden Ansprüche, wobei das Befestigungselement (3) eine Kompressionskraft (F) auf die mindestens eine Hinterschneidung (103, 113) ausübt, so dass es in einem Kontaktbereich (12.2) mit einer Oberfläche (102, 112, 103, 113) der ersten Struktur (10) oder der zweiten Struktur (11) in Kontakt steht, die der Struktur gegenüberliegt, zu der die mindestens eine Hinterschneidung (103, 113) gehört, wobei der Kontaktbereich (12.2) einen Teil (12.2) der Verbindungsschnittstelle (12) bildet.

3. Baugruppe (1) nach einem der vorhergehenden Ansprüche, wobei die mindestens eine Hinterschneidung (103, 113) von dem mindestens einen ersten Loch (101) oder von dem mindestens einen zweiten Loch (111) ausgeht, um das sie angeordnet ist.

4. Baugruppe (1) nach einem der vorhergehenden Ansprüche, wobei die erste Struktur (10) eine erste Kontaktfläche (102) aufweist und die zweite Struktur (11) eine zweite Kontaktfläche (112) aufweist, wobei die erste Kontaktfläche (102) und die zweite Kontaktfläche (112) einen Teil (12.1) der Verbindungsschnittstelle (12) bilden.

5. Baugruppe (1) nach einem der vorhergehenden Ansprüche, wobei die mindestens eine Hinterschneidung (103, 113) eine Neigung (s, s') aufweist, die sich von dem mindestens einen ersten Loch (101) oder von dem mindestens einen zweiten Loch (111), um das sie angeordnet ist, zur Verbindungsschnittstelle (12) erstreckt.

6. Baugruppe (1) nach dem vorhergehenden Anspruch 4, wobei die mindestens eine Hinterschneidung (103, 113) eine flache Oberfläche aufweist, die parallel zur ersten Kontaktfläche (102) oder zur zweiten Kontaktfläche (112) der ersten Struktur (10) bzw. der zweiten Struktur (11) ist, zu der die mindestens eine Hinterschneidung (103, 113) gehört.

7. Baugruppe (1) nach einem der vorhergehenden Ansprüche, wobei die mindestens eine Hinterschneidung (103, 113) in der Draufsicht eine kreisförmige Form aufweist.

8. Baugruppe (1) nach einem der vorhergehenden Ansprüche, wobei die erste Struktur (10) eine Telematik-Steuereinheit ist.

9. Baugruppe (1) nach einem der vorhergehenden Ansprüche, wobei die zweite Struktur (11) eine Motorhaube oder ein Dach ist.

10. Verfahren (5) zum Zusammenbau einer ersten Struktur (10) und einer zweiten Struktur (11) entlang einer Verbindungsschnittstelle (12), wobei das Verfahren (5) umfasst:
- Bereitstellen einer ersten Struktur (10), die mindestens ein erstes Loch (101) umfasst, das durch die gesamte erste Struktur (10) verläuft,
- Bereitstellen einer zweiten Struktur (11), die mindestens ein zweites Loch (111) umfasst, das durch die gesamte zweite Struktur (11) verläuft, wobei die erste Struktur (10) mindestens eine Hinterschneidung (103) umfasst, die um das mindestens eine erste Loch (101) angeordnet ist, und die zweite Struktur (11) mindestens eine Hinterschneidung (113) umfasst, die um das mindestens eine zweite Loch (111) angeordnet ist,
- Positionieren der ersten Struktur (10) und der zweiten Struktur (11), so dass sie miteinander in Kontakt kommen und so dass das mindestens eine zweite Loch (111) gegenüber dem mindestens einen ersten Loch (101) angeordnet ist,
- Positionieren eines Befestigungselements (3) durch das mindestens eine erste Loch (101) und durch das mindestens eine zweite Loch (111),
- Ausüben einer Kompressionskraft (F) auf die erste Struktur (10) und auf die zweite Struktur (11) mittels des Befestigungselements (3), so dass die mindestens eine Hinterschneidung (103, 113) in einem Kontaktbereich (12.2) mit einer Oberfläche (102, 112, 103, 113) der ersten Struktur (10) oder der zweiten Struktur (11) in Kontakt kommt, die der Struktur gegenüberliegt, zu der die mindestens eine Hinterschneidung (103, 113) gehört, wobei der Kontaktbereich (12.2) einen Teil der Verbindungsschnittstelle (12) bildet, so dass, wenn die Kompressionskraft F auf das Befestigungselement ausgeübt wird, die Kompressionskraft F unter einem Dreieck in einer Schnittansicht übertragen wird, das einen Druckkegel (32) darstellt, der bis zum Hinterschneidungsbereich erzeugt wird.

11. Verfahren (5) nach dem vorhergehenden Anspruch, wobei die Oberfläche, mit der die mindestens eine Hinterschneidung (103, 113) in Kontakt kommt, die erste Kontaktfläche (102) oder die zweite Kontaktfläche (112) oder eine gegenüberliegende Hinterschneidung (113, 103) ist.

12. Verfahren (5) nach Anspruch 10 oder Anspruch 11, wobei die erste Struktur (10) eine erste Kontaktfläche (102) aufweist und die zweite Struktur (11) eine zweite Kontaktfläche (112) aufweist, und wobei die erste Struktur (10) und die zweite Struktur (11) so positioniert werden, dass die erste Kontaktfläche (102) und die zweite Kontaktfläche (112) in Kontakt kommen, um einen ersten Teil (12.1) der Verbindungsschnittstelle (12) zu bilden.

## Revendications

1. Assemblage (1) pour un véhicule (2) comprenant :
- une première structure (10) et une seconde structure (11) qui sont jointes le long d'une interface de jonction (12), ladite première structure (10) comprenant au moins un premier trou (101) qui traverse toute la première structure (10) et ladite seconde structure (11) comprenant au moins un second trou (111) qui traverse toute la seconde structure (11) et qui est disposé en face dudit au moins un premier trou (101),
- une fixation (3) positionnée à travers ledit au moins un trou (101) et ledit au moins un second trou (102),
dans lequel ladite première structure (10) comprend au moins une contre-dépouille (103) autour dudit au moins un premier trou (101) et ladite seconde structure (11) comprend au moins une contre-dépouille (113) qui est disposée autour dudit au moins un second trou (111) de sorte que lorsqu'une force de compression F est appliquée sur la fixation, la force de compression F est transmise sous un triangle dans une vue en coupe qui représente un cône de pression (32) créé jusqu'à la zone de contre-dépouille.

2. Assemblage (1) selon l'une quelconque des revendications précédentes, dans lequel ladite fixation (3) applique une force de compression (F) sur ladite au moins une contre-dépouille (103, 113) de sorte qu'elle est en contact dans une zone de contact (12.2) avec une surface (102, 112, 103, 113) de la première structure (10) ou de la seconde structure (11) opposée à celle à laquelle appartient ladite au moins une contre-dépouille (103, 113), ladite zone de contact (12.2) formant une partie (12.2) de l'interface de jonction (12).

3. Assemblage (1) selon l'une quelconque des revendications précédentes, dans lequel ladite au moins une contre-dépouille (103, 113) commence à partir dudit au moins un premier trou (101) ou dudit au moins un second trou (111) autour duquel elle est disposée.

4. Assemblage (1) selon l'une quelconque des revendications précédentes, dans lequel ladite première structure (10) présente une première surface de contact (102) et ladite seconde structure (11) présente une seconde surface de contact (112), ladite première surface de contact (102) et ladite seconde surface de contact (112) formant une partie (12.1) de l'interface de jonction (12).

5. Assemblage (1) selon l'une quelconque des revendications précédentes, dans lequel ladite au moins une contre-dépouille (103, 113) comprend une pente (s, s') qui s'étend dudit au moins un premier trou (101) ou dudit au moins un second trou (111) autour duquel elle est disposée jusqu'à l'interface de jonction (12).

6. Assemblage (1) selon la revendication précédente 4, dans lequel ladite au moins une contre-dépouille (103, 113) a une surface plane qui est parallèle à la première surface de contact (102) ou à la seconde surface de contact (112) de respectivement la première structure (10) ou la seconde structure (11) à laquelle appartient ladite au moins une contre-dépouille (103, 113).

7. Assemblage (1) selon l'une quelconque des revendications précédentes, dans lequel ladite au moins une contre-dépouille (103, 113) a une forme circulaire en vue de dessus.

8. Assemblage (1) selon l'une quelconque des revendications précédentes, dans lequel ladite première structure (10) est une Unité de Contrôle Télématique.

9. Assemblage (1) selon l'une quelconque des revendications précédentes, dans lequel ladite seconde structure (11) est un capot ou un toit.

10. Procédé (5) d'assemblage d'une première structure (10) et d'une seconde structure (11) le long d'une interface de jonction (12), ledit procédé (5) comprenant :
- la fourniture d'une première structure (10) comprenant au moins un premier trou (101) qui traverse toute la première structure (10),
- la fourniture d'une seconde structure (11) comprenant au moins un second trou (111) qui traverse toute la seconde structure (11), ladite première structure (10) comprend au moins une contre-dépouille (103) disposée autour dudit au moins un premier trou (101) et ladite seconde structure (11) comprenant au moins une contre-dépouille (113) qui est disposée autour dudit au moins un second trou (111),
- le positionnement de ladite première structure (10) et de ladite seconde structure (11) de sorte qu'elles entrent en contact l'une avec l'autre et de sorte que ledit au moins un second trou (111) soit disposé en face dudit au moins un premier trou (101),
- le positionnement d'une fixation (3) à travers ledit au moins un premier trou (101) et à travers ledit au moins un second trou (111),
- l'application d'une force de compression (F) sur la première structure (10) et sur la seconde structure (11) au moyen de ladite fixation (3) de sorte que ladite au moins une contre-dépouille (103, 113) entre en contact dans une zone de contact (12.2) avec une surface (102, 112, 103, 113) de la première structure (10) ou de la seconde structure (11) opposée à celle à laquelle appartient ladite au moins une contre-dépouille (103, 113), ladite zone de contact (12.2) formant une partie de l'interface de jonction (12), de sorte que lorsque ladite force de compression F est appliquée sur la fixation, la force de compression F est transmise sous un triangle dans une vue en coupe qui représente un cône de pression (32) créé jusqu'à la zone de contre-dépouille.

11. Procédé (5) selon la revendication précédente, dans lequel la surface avec laquelle ladite au moins une contre-dépouille (103, 113) entre en contact est la première surface de contact (102) ou la seconde surface de contact (112) ou une contre-dépouille opposée (113, 103).

12. Procédé (5) selon la revendication 10 ou la revendication 11, dans lequel ladite première structure (10) présente une première surface de contact (102) et ladite seconde structure (11) présente une seconde surface de contact (112), et dans lequel ladite première structure (10) et ladite seconde structure (11) sont positionnées de sorte que ladite première surface de contact (102) et ladite seconde surface de contact (112) entrent en contact pour former une première partie (12.1) de l'interface de jonction (12).
